Europäisches Patentamt

European Patent Office

Office européen des brevets

(19)

(11) EP 0 436 429 B1

(12)

# FASCICULE DE BREVET EUROPEEN

(45) Date de publication et mention
de la délivrance du brevet:
**10.03.1999 Bulletin 1999/10**

(51) Int Cl.⁶: **G02B 26/10**

(21) Numéro de dépôt: **90403734.8**

(22) Date de dépôt: **21.12.1990**

(54) **Dispositif de balayage et son application aux dispositifs d'analyse**

Abtastvorrichtung und ihre Anwendung in Analysevorrichtungen

Scanning device and its application in analyzing devices

(84) Etats contractants désignés:
**DE GB IT NL SE**

(30) Priorité: **26.12.1989 FR 8917166**

(43) Date de publication de la demande:
**10.07.1991 Bulletin 1991/28**

(73) Titulaire: **SAGEM SA**
**75116 Paris (FR)**

(72) Inventeur: **Baillet, Gérard**
**F-86280 St. Benoit (FR)**

(74) Mandataire: **Bloch, Gérard et al**
**2, square de l'Avenue du Bois**
**75116 Paris (FR)**

(56) Documents cités:
EP-A- 0 040 973          US-A- 3 360 659
US-A- 3 619 039          US-A- 4 268 110
US-A- 4 805 974

## Description

La présente invention se rapporte aux dispositifs de balayage, par exemple tels que ceux utilisés dans les systèmes d'analyse d'image, de visée, de veille ou encore tels que ceux utilisés par exemple en reconnaissance aérienne. Ces dispositifs de balayage permettent, par exemple à un miroir, de balayer un champ de vue autour d'un axe de déplacement et de renvoyer l'image de ce champ vers un dispositif détecteur par l'intermédiaire de moyens de focalisation.

De tels dispositifs de balayage trouvent leur application dans tout système optique d'écartométrie, de gonométrie, de télémétrie ou encore tout dispositif de métrologie infrarouge, visible, ultraviolet.

Plus particulièrement, un tel dispositif de balayage trouve une application dans les analyseurs (line-scanner) de lignes.

Un analyseur comporte habituellement un miroir à plusieurs facettes réfléchissant un faisceau incident d'analyse du paysage, ce miroir étant commandé par de tels dispositifs de balayage, le faisceau réfléchi étant reçu ensuite au moyen d'une barrette ou d'une petite mosaïque de détecteurs.

Pour réaliser un analyseur performant, il faut conjuguer trois efforts essentiels :

-   avoir un système de balayage à grand angle,
-   augmenter le nombre de faces du miroir tournant ou du prisme,
-   réduire le diamètre du prisme pour une dimension donnée de la pupille.

Il faut, pour obtenir le nombre maximum de lignes analysées par unité de temps et par élément de détection, pour une puissance minimale d'entraînement du prisme réfléchissant, augmenter l'angle de balayage du faisceau d'analyse incident ainsi que sa vitesse.

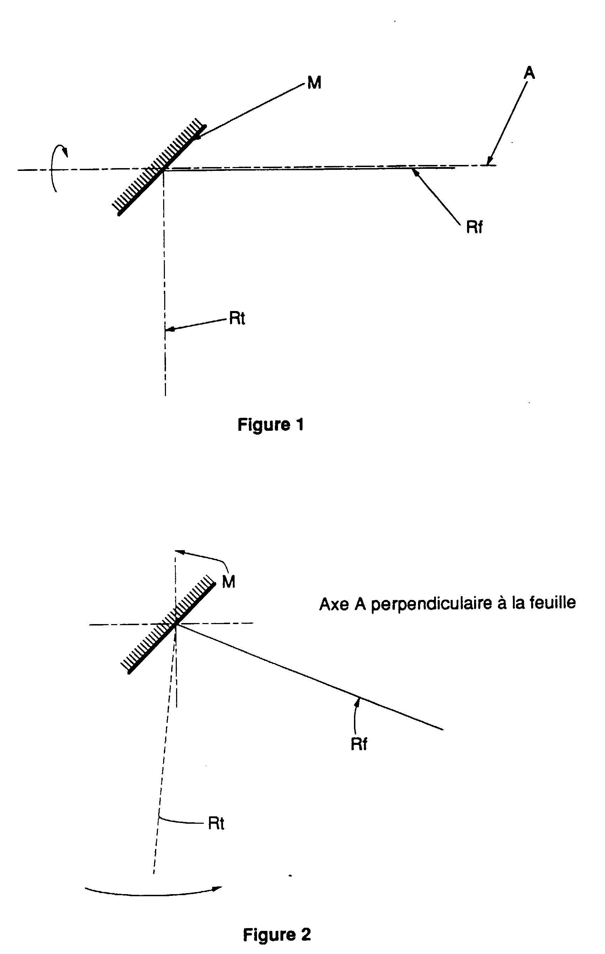

Les dispositifs de balayage connus peuvent par exemple être du type de ceux de la figure 1 ou du type de ceux de la figure 2.

Dans l'exemple de la figure 1, le faisceau tourne après réflexion sur le ou les miroirs solidaires d'un axe de rotation dans un plan perpendiculaire à l'axe A. L'axe de rotation du miroir est confondu avec l'axe A. Le faisceau tourne alors à la même vitesse que le miroir tournant, le rayon fixe étant en dehors du plan dans lequel le faisceau tourne.

Dans l'exemple de la figure 2, le miroir tourne autour d'un axe perpendiculaire au plan de la feuille et le faisceau tourne deux fois plus vite que le miroir tournant ; le rayon $R_f$ fixe se trouve dans le plan où le faisceau tourne.

Ces sytèmes connus présentent chacun des avantages :

-   Pour le système de la figure 1, il permet de grands angles de rotation du rayon tournant autour de l'axe A.

-   Pour le système de la figure 2, l'angle de déviation maximum du faisceau tournant est limité à (360 degrés x 2)/ N où N est le nombre de faces du miroir multifaces, soit le double du système 1.

Toutefois, ces systèmes connus présentent de grands inconvénients que la présente invention va s'efforcer de pallier.

-   Dans le premier cas, l'angle de déviation maximum est nettement inférieur à 360 degrés/N.

-   Dans le second cas, le rayon fixe étant dans le plan du faisceau tournant, les faces du miroir doivent être grandes pour éviter le vignetage et garder une pupille oblique constante.

US-A-3 360 659 enseigne un système de balayage optique permettant à un faisceau issu d'une source de converger dans un plan. Ce faisceau ne décrit pas un plan mais s'appuie sur une courbe.

La présente invention vise à réaliser un système idéal, c'est-à-dire comportant les avantages des deux systèmes précités et en particulier dans lequel le faisceau tourne plus vite que le prisme et dans lequel le rayon fixe se trouve en dehors du plan de balayage.

Les moyens pour réfléchir le faisceau lumineux peuvent être un simple miroir, un polygone réfléchissant, un prisme, ou tout dispositif susceptible de réfléchir le faisceau incident vers un récepteur par exemple en matériau semiconducteur.

Ainsi, l'invention concerne un dispositif de balayage selon la revendication 1.

En outre, pour chaque incidence 1/2 $B_1$ du rayon incident tournant $R_T$ sur les moyens réfléchissants M correspond un angle pour lequel le rayon réfléchi $R_f$ est fixe et se trouve hors du plan $P_t$ de balayage dans lequel évolue le rayon tournant $R_T$.

En particulier, l'angle i que fait l'axe de rotation R desdits moyens réfléchissants M avec la direction A s'écrit :

$$i = \frac{\pi}{2} - B_3 - \frac{1}{2} B_1$$

où $B_3$ est par exemple la solution du système de 6 équations à 6 inconnues de la revendication 2.

Toujours selon l'invention, les moyens réfléchissants sont un miroir ou un prisme à N côtés, chaque côté étant réfléchissant, ou un tronc de pyramide régulière dont les faces latérales sont réfléchissantes et font le même angle avec l'axe de rotation R, les deux bases étant formées de polygones réguliers. Ces moyens réfléchissants peuvent encore selon l'invention être un polyèdre limité par deux polygones plans, lesdits polygones plans étant orthogonaux à l'axe R de rotation, les N faces latérales dudit polyèdre étant des trapèzes inclinés sur ledit axe R de rotation d'un angle $\alpha_n$, chaque angle $\alpha_n$ étant sensiblement différent des angles $\alpha_{n-1}$ et $\alpha_{n+1}$ d'une quantité infinitésimale.

Selon une autre caractéristique, le faisceau lumineux incident est un faisceau de lumière visible ou infrarouge, ultraviolet, cohérente ou incohérente.

Le dispositif de balayage de l'invention peut comporter en outre un circuit électronique de lecture du signal du détecteur, un dispositif d'entraînement autorisant une rotation des moyens réfléchissants et des moyens de codage de cette rotation et de lecture fournissant une information audit circuit électronique de lecture.

D'autres avantages et caractéristiques apparaîtront à la lecture de la description suivante.

La figure 1 représente un schéma des positions relatives du miroir M, du faisceau incident et de l'axe A de rotation du miroir M selon l'art antérieur.

La figure 2 représente une variante de l'art antérieur pour laquelle l'axe de rotation se trouve dans un plan perpendiculaire au rayon fixe ainsi qu'au rayon tournant.

La figure 3 représente la réalisation de l'invention.

La figure 4 illustre la variation d'écart $\varepsilon$ que le rayon $R_T$ fait avec le plan Pt perpendiculaire à la direction A en fonction de 1/2 $B_1$, angle d'incidence du faisceau lumineux selon l'invention.

La figure 5 représente la variation de i, angle choisi pour l'axe de rotation R par rapport à la direction A en fonction de $B_1$.

La figure 6 représente une réalisation d'analyseur selon l'invention.

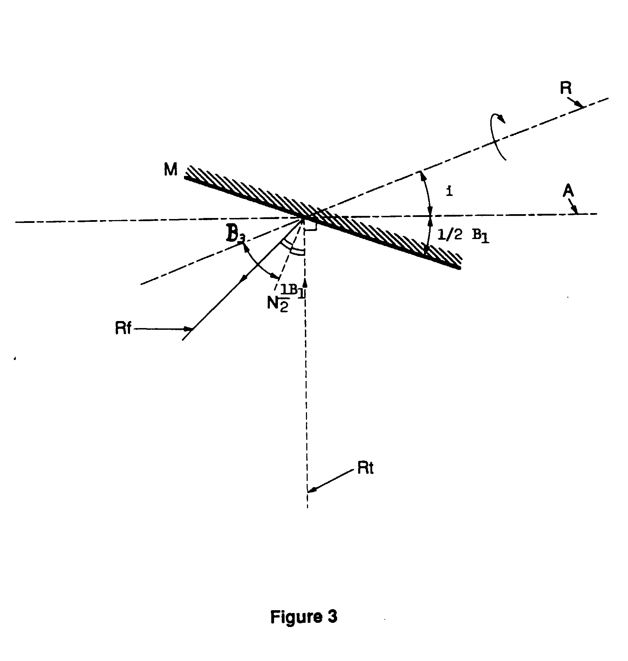

En se référant à la figure 3, le dispositif de balayage de l'invention est essentiellement formé d'un miroir M (ou d'un prisme) réfléchissant, ce miroir tournant autour d'un axe R de rotation distinct de la perpendiculaire au rayon tournant $R_T$.

En effet, on choisit selon l'invention un angle 1/2 $B_1$ de grandeur convenablement choisie, 1/2 $B_1$ représentant l'angle entre la normale au miroir M et le rayon fixe $R_f$ et toujours selon l'invention i représentant l'angle entre la perpendiculaire A au rayon tournant et l'axe R de rotation du miroir M. Cet axe R de rotation se trouve dans le même plan que le rayon $R_f$ et que la direction A, ce rayon fixe $R_f$ faisant lui-même un angle 1/2 $B_1$ avec la normale N au miroir M. De la sorte, lorsque le miroir M effectue une rotation autour de l'axe R précité, le rayon $R_T$ tourne sensiblement dans le plan perpendiculaire à la direction A. En effet, l'écart maximum du rayon $R_T$ par rapport au plan perpendiculaire à la direction A peut rester inférieur au 1/10 de degré, ce qui est très raisonnable pour des déviations typiquement de ± 50 degrés.

En outre, le rayon de sortie $R_T$ tourne avec le miroir M mais x fois plus vite, x étant lié à l'angle de rotation du rayon tournant $R_T$ ainsi qu'il apparaîtra ultérieurement.

Les calculs suivants permettent de vérifier les grandeurs $B_1$, i, pour lesquelles le rayon tournant $R_T$ se déplace dans un plan sensiblement perpendiculaire à la direction A, et ceci pour des angles $A_1$ de rotation du rayon tournant $R_T$ tout à fait satisfaisants.

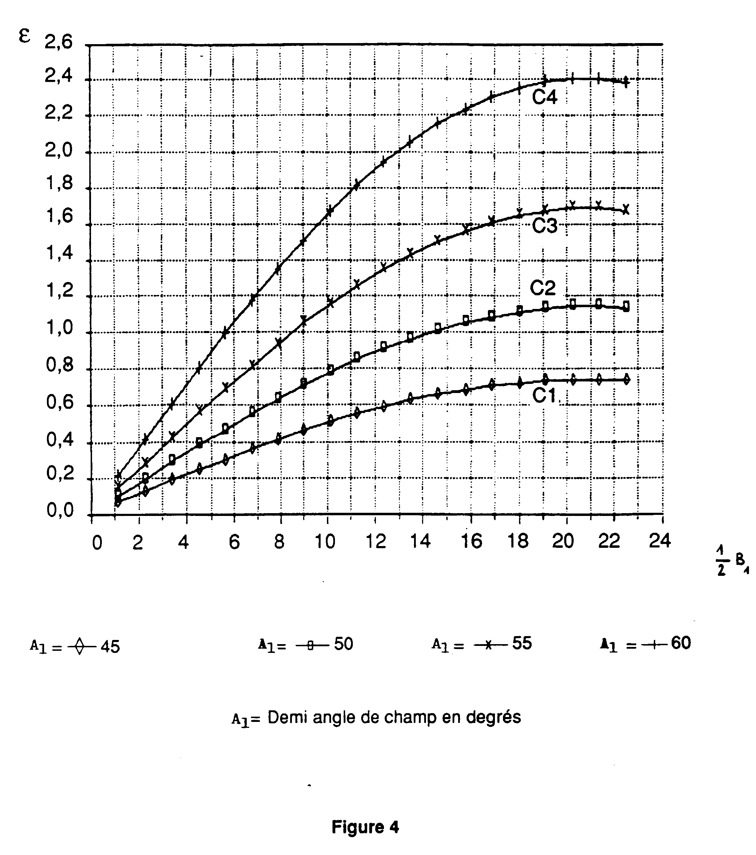

La figure 4 illustre l'écart 2 en milliradians que le rayon tournant $R_T$ fait avec le plan perpendiculaire à la direction A en fonction de l'angle 1/2 $B_1$ d'incidence au faisceau lumineux. On constate sur cette figure 4 que cet écart $\varepsilon$ est certes variable selon que la rotation recherchée pour ce rayon tournant est plus ou moins grande. Quatre courbes sont tracées pour quatre valeurs de la rotation recherchée pour le rayon $R_T$ tournant, chaque valeur $A_1$ représentant le demi-angle de champ en degrés :

$A_1$ = +45 degrés, $A_1$ = +50 degrés, $A_1$ = +55 degrés, et enfin $A_1$ = +60 degrés

Pour la valeur $A_1$ = +45 degrés, l'écart maximal E du rayon tournant par rapport au plan perpendiculaire à la direction A reste très réduit. Il croit en fonction de l'angle 1/2 $B_1$ d'incidence. La courbe $C_1$ représente cette croissance lorsque 1/2 $B_1$ varie entre 1 degré et 22 degrés. Cet écart avoisine 0,7 mrd au voisinage de 22 degrés.

La courbe $C_2$ représente la même variation de l'angle d'écart $\varepsilon$ maximal du rayon $R_T$ tournant par rapport à la perpendiculaire à A lorsque ce rayon tournant effectue une rotation de ±50 degrés dans ce plan perpendiculaire à A, on constate que l'écart $\varepsilon$ est légèrement plus important mais reste inférieur à 2,2 mrd pour la gamme de variation de l'angle 1/2 $B_1$ d'incidence.

Les courbes $C_3$ et $C_4$ représentent respectivement des écarts $\varepsilon$ dans les mêmes conditions [$B_1$/2 $\varepsilon$ (1 degré,

27 degrés)] mais pour des demi-angles $A_1$ de rotation du rayon tournant $R_T$ égaux respectivement à 55 degrés et 60 degrés.

Lorsque le système d'analyse ne requiert pas une large rotation ($A_1$ < 45 degrés), l'écart $\varepsilon$ est à fortiori encore meilleur ou encore le rayon tournant reste quasiment dans le plan $P_t$ perpendiculaire à A.

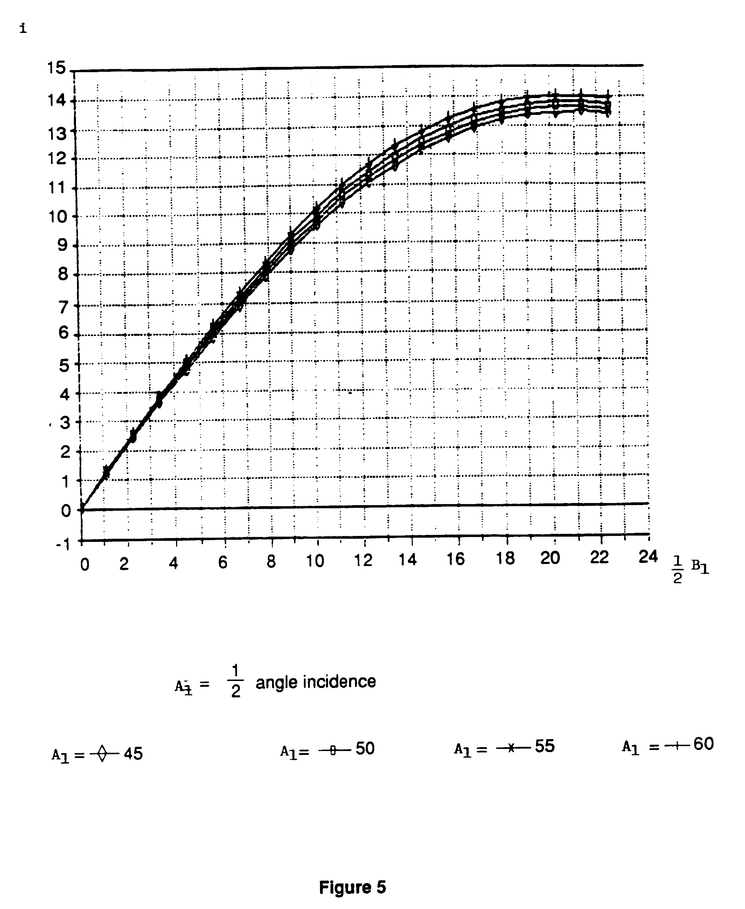

La figure 5 représente la variation de l'angle i choisi pour l'axe R de rotation par rapport à la direction A. On constate que, lorsque l'angle $A_1$ de rotation du rayon tournant dans le plan perpendiculaire à A varie de ±45 degrés ou ±60 degrés, il n'y a pas de différence notable pour la valeur de i. Toutefois, l'angle i varie de 1 degré à 14 degrés lorsque 1/2 $B_1$ varie de 1 degré à 22 degrés.

Pour un demi-angle $A_1$ de balayage souhaité et pour un angle 1/2 $B_1$ d'incidence sur les moyens réfléchissants M, correspond un angle i optimal pour lequel le rayon $R_T$ tourne le plus vite avec la rotation de chaque facette des moyens réfléchissants. En effet, s'il s'agit d'un prisme à N faces, chaque face balaye le champ de ±$A_1$ et initialise le balayage à une extrémité.

Par exemple, pour une rotation du rayon tournant $R_T$ de $A_1$ égal à ±45 degrés et pour une incidence 1/2 $B_1$ du rayon tournant égale à 11,25 degrés décimaux, on trouve une inclinaison i de l'axe R de rotation des moyens M réfléchissants de 10,38 degrés décimaux. Le rayon tournant tourne alors 1,82 fois plus vite que les moyens M réfléchissants, ce qui est extrêmement proche des résultats du second système (fig. 2) de l'art antérieur tout en ayant un rayon fixe situé hors du plan de balayage.

En fait, le coefficient multiplicateur n'est pas exactement égal à 1,82 mais varie de 1,8234 au centre à 1, 8205 au bord du champ, soit une non linéarité de l'ordre de 0,15 % parfaitement négligeable. On voit donc que, si le rayon ne tourne pas exactement dans le plan perpendiculaire à A, il ne s'en éloigne que d'une quantité négligeable. Diverses méthodes permettant d'obtenir ces grandeurs vont être schématiquement développées ci-dessous.

On recherche donc l'inclinaison de l'axe R par rapport à la direction A avec la valeur de l'angle d'incidence fixe 1/2 $B_1$ de manière à minimiser l'angle entre le rayon tournant $R_T$ et le plan perpendiculaire à cette direction A. Cette erreur peut être exprimée de diverses manières : par une erreur crête à crête, une erreur quadratique moyenne, une erreur moyenne, etc...

Le calcul suivant minimise l'erreur crête à crête dans le champ balayé par le rayon tournant $R_T$. Le choix d'un autre type d'erreur donnerait des résultats très voisins.

Pour exécuter les calculs, on se fixe l'angle de champ et l'angle d'incidence de la manière suivante.

Soit $A_1$ le demi-angle de champ de $R_T$ dans le plan à peu près perpendiculaire à la direction.

Soit $B_1$ deux fois l'angle d'incidence de ce même rayon tournant $R_T$.

On en déduit que l'inclinaison de l'axe de rotation R sur l'axe A se déduit de $B_1$ par la relation :

$$i = \frac{\pi}{2} - B_3 - \frac{B_1}{2}$$

où $B_3$ est la solution d'un système de 6 équations à 6 inconnues ($C_1$, $\alpha_1$, $A_2$, $\gamma_2$, $\alpha_3$, $B_3$).

$$\cos C_1 = \cos A_1 \, . \, \cos B_1$$

$$\cos C_1 = \cos A_1 \, . \, \cos B_1$$

$$\tan \alpha_1 = \frac{\tan A_1}{\sin B_1}$$

$$\cos A_2 = [\, \cos \frac{B_1}{2} \, . \, \cos \frac{C_1}{2} \,] + [\, \sin \frac{B_1}{2} \, . \, \sin \frac{C_1}{2} \, . \, \cos \alpha_1 \,]$$

$$\cos \gamma_2 = \frac{\cos \frac{C_1}{2} - \cos A_2 \cos \frac{B_1}{2}}{\sin A_2 \sin \frac{B_1}{2}}$$

$$\cos \alpha_3 = [-\cos^2 \gamma_2] + [\sin^2 \gamma_2 . \cos A_2]$$

$$\cos B_3 = \frac{\cos \gamma_2 + \cos \gamma_2 \cos \alpha_3}{\sin \gamma_2 . \sin \alpha_3}$$

où $\alpha_3$ est le demi-angle de rotation du miroir M.

Un programme permet de résoudre ce système d'équations et d'en déduire l'angle i d'inclinaison de l'axe de rotation R sur l'axe A, $A_2$ et $B_1$ étant prédéterminés (voir programme en fin de description).

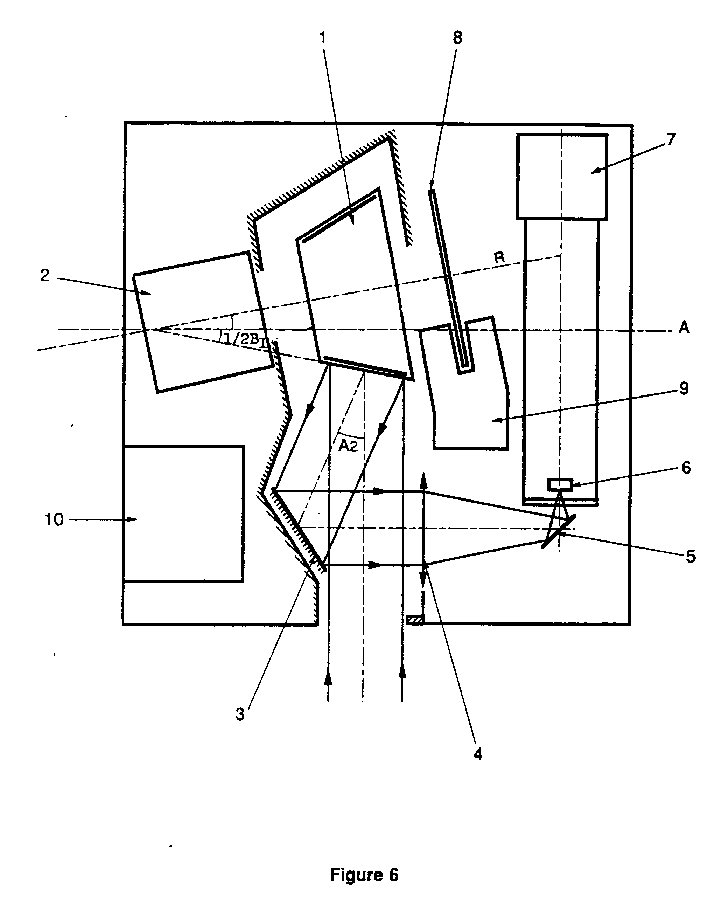

La figure 6 représente un analyseur utilisant un dispositif de balayage selon la présente invention. L'axe R de rotation du prisme 1 tournant réfléchissant n'est pas perpendiculaire au plan du rayon $R_T$ tournant mais au contraire fait un angle i avec la normale A au plan $P_t$ dans lequel le rayon $R_T$ tourne, cet axe R étant également situé dans le plan contenant l'axe A et $R_f$ le rayon fixe.

Le moteur 2 entraîne le prisme 1 en rotation tandis que le rayon tournant $R_T$ est réfléchi par une face latérale de ce prisme 1, selon une direction formant un angle $A_2$ avec la direction d'incidence. Un miroir 3 intercepte ce rayon réfléchi fixe et le renvoie vers une optique 4 de focalisation. Après une seconde réflexion, par exemple au moyen d'un miroir 5, le rayon réfléchi fixe est reçu par une barrette 6 formée d'une pluralité d'éléments photodétecteurs. Un circuit électronique 7 analyse les signaux reçus par cette barrette 6 en synchronisme avec les informations fournies par le disque 8 permettant de coder et connaître la position du prisme 1. Un circuit 9 de lecture du disque 8 fournit cette information au circuit 7 électronique.

Le rayon fixe $R_f$ se trouve hors du plan de balayage. Le prisme 1 tournant réfléchissant peut comporter un nombre quelconque de faces (de 1 à N), N pouvant être aussi grand que l'on veut, ceci dans les limites de l'encombrement du système. Dans la pratique, on peut utiliser comme prisme 1 réfléchissant un tronc de pyramide régulière dont les faces latérales sont réfléchissantes et font le même angle avec l'axe R de rotation et dont les deux bases sont formées de polygones réguliers.

Dans une autre réalisation non représentée, les moyens réfléchissants sont un polyèdre limité par deux polygones plans, lesdits polygones étant orthogonaux à l'axe R de rotation, des N faces latérales dudit polyèdre étant des trapèzes inclinés sur l'axe R de rotation d'un angle $\alpha_n$, chaque angle $\alpha_n$ étant sensiblement différent des angles $\alpha_{n-1}$, et $\alpha_{n+1}$ d'une grandeur convenablement choisie.

Le nombre N de faces du prisme 1 réfléchissant est un compromis entre de nombreux paramètres dont les principaux sont les suivants :

- l'encombrement,
- le rendement d'analyse souhaité,
- la puissance du moteur dont on peut disposer (la puissance I consommée par un dispositif tournant est proportionnelle à la puissance cinq du diamètre et au cube de la vitesse de rotation $\Gamma :: D^5 \omega^3$),
- du nombre de lignes lues par secondes.

Par exemple, le rendement d'analyse est proche de 1 lorsque le temps mort est minimisé. Ce sera le cas pour un nombre de faces N élevé.

De même, à vitesse faible, on peut se contenter d'un petit moteur 2. Or, la vitesse est inversement proportionnelle au nombre N de faces du prisme 1.

Enfin, un nombre N de faces important pour ce prisme 1 occasionne un encombrement important. Comme on conserve une rotation de l'image faible dans le plan focal de l'optique 4, on peut utiliser avantageusement une barrette 6 de lecture du signal d'analyse permettant de lire plusieurs lignes simultanément au moyen d'une seule rotation du rayon tournant. Dans la pratique, la barrette 6 peut être formée de six éléments détecteurs. De la sorte, si le rayon $R_T$ ne tourne pas exactement dans le plan perpendiculaire à A, il ne s'en éloigne que d'une quantité négligeable qui introduit dans le système des erreurs non décelables ou qui peuvent être corrigées aisément par exemple par l'insertion d'un dispositif de correction en sortie de la lecture des informations fournies par la barrette 6, par exemple en programmation.

Un dispositif de balayage selon l'invention s'applique tout particulièrement à l'imagerie en particulier dans le domaine de l'infrarouge, du visible, de l'ultraviolet, pour des systèmes aussi bien passifs qu'actifs.

Le dispositif de balayage selon l'invention s'applique aux systèmes d'écartométrie ou plus généralement aux systèmes de métrologie dans le domaine de l'infrarouge, du visible, de l'ultraviolet, pour des systèmes aussi bien actifs que passifs.

L'invention présente en outre l'avantage de réduire le volume occupé par le dispositif d'imagerie et d'augmenter la vitesse d'analyse.

```
90 CLS
100 PI=3.141592634#
110 PI2=PI/2
120 GOTO 200
130  REM sp calcul arc cos
140  IF CS<-1 THEN CS=-1
150  IF CS>1  THEN CS=1
160  IF CS=0  THEN ANG=PI2:GOTO 190
170  ANG=ATN(SQR(1-CS'CS)/CS)
180  IF CS<0 THEN ANG=ANG+PI
190  RETURN
200 REM facteur de conversion_____
210 DEGR=180/PI
220 RADI=PI/180
230 INPUT "demi champ ";DCHAMP
240 INPUT "angle incidence ";INCI
245 REM premier triangle_____
250 A1=DCHAMP'RADI
260 B1=INCI'2'RADI
270 CSC1=COS(A1)'COS(B1)
280 CS=CSC1:GOSUB 140
290 C1=ANG
300 TANALF1=TAN(A1)/SIN(B1)
310 ALF1=ATN(TANALF1)
320 REM deuxieme triangle_____
330 ALF2=ALF1
340 C2=C1/2
350 B2=B1/2
360 CSA2=(COS(B2)'COS(C2))+(SIN(B2)'SIN(C2)'COS(ALF2))
370 CS=CSA2:GOSUB 140
380 A2=ANG
390 CSGAM2=(COS(C2)-(COS(A2)'COS(B2)))/(SIN(A2)'SIN(B2))
400 CS=CSGAM2:GOSUB 140
410 GAM2=ANG
420 REM troisieme triangle_____
430 REM triangle isocele
440 GAM3=GAM2
450 BET3=GAM2
460 A3=A2
470 CSALF3=(-COS(BET3)'COS(GAM3))+(SIN(BET3)'SIN(GAM3)'COS(A3))
480 CS=CSALF3:GOSUB 140
490 ALF3=ANG
500 CSB3=(COS(BET3)+(COS(GAM3)'COS(ALF3)))/(SIN(GAM3)'SIN(ALF3))
502 CS=CSB3:GOSUB 140
504 B3=ANG
510 ANGAXE=PI2-B3-(B1/2)
520 PRINT USING "rotation +###.####      axe rot +###.#####";ALF3'DEGR,ANGAXE'DEG
R
```

## Revendications

1.  Dispositif de balayage d'un faisceau lumineux, comprenant des moyens réfléchissants (M, 1) mobiles autour d'un axe de rotation (R) et inclinés sur cet axe d'un premier angle donné $\frac{1}{2}B_1 + i$, ledit axe de rotation et ledit angle i définissant un plan idéal de balayage du faisceau lumineux incliné sur l'axe de rotation (R) d'un deuxième angle donné i+90°,

    les éléments dudit dispositif étant adaptés de façon à réfléchir un faisceau tournant ($R_T$) provenant d'un champ de vue ayant un demi-angle donné $A_1$ en un faisceau fixe ($R_f$), incliné sur le plan idéal d'un angle $B_1$, vers un détecteur (6),

    l'ensemble des trois angles $A_1$, i, $B_1$ étant choisi de manière à minimiser l'écart angulaire entre le faisceau tournant ($R_T$) et ledit plan idéal de balayage.

2.  Dispositif de balayage selon la revendication 1, dans lequel l'angle (i) s'écrit :

$$i = \frac{\pi}{2} - B_3 - \frac{1}{2} B_1$$

où $B_1$ est l'angle entre RT et RF, RT correspondant à l'intersection des deux plans PT et PF et où $B_3$ est la solution du système suivant de 6 équations à 6 inconnues :

$$\tan \alpha_1 = \frac{\tan A_1}{\tan B_1}$$

$$\cos A_2 = [ \cos \frac{B_1}{2} \cos \frac{C_1}{2} ] + [ \sin \frac{B_1}{2} \sin \frac{C_1}{2} \cos \alpha_1]$$

$$\cos \gamma_2 = [\cos \frac{C_1}{2} - \cos A_2 \cos \frac{B_1}{2}] / \sin A_2 \sin \frac{1}{2} B_1$$

$$\cos B_3 = \frac{\cos \gamma_2 + \cos \gamma_2 \cdot \cos \alpha_3}{\sin \alpha_3 \sin \gamma_2}$$

$$\cos \alpha_3 = (-\cos^2 \gamma_2) + \sin^2 \gamma_2 \cdot \cos A_2$$

3. Dispositif de balayage selon l'une des revendications 1 et 2, dans lequel lesdits moyens réfléchissants sont un miroir.

4. Dispositif de balayage selon l'une des revendications 1 et 2, dans lequel lesdits moyens réfléchissants sont un prisme à N côtés, chaque côté étant réfléchissant.

5. Dispositif de balayage selon l'une des revendications 1 et 2, dans lequel lesdits moyens réfléchissants sont un tronc d'une pyramide régulière dont les faces latérales sont réfléchissantes et font le même angle avec l'axe de rotation (R), les deux bases étant formées de polygones réguliers.

6. Dispositif de balayage selon l'une des revendications 1 et 2, dans lequel lesdits moyens réfléchissants sont un polyèdre limité par deux polygones plans, lesdits polygones plans étant orthogonaux à l'axe (R), les N faces latérales dudit polyèdre étant des trapèzes inclinés sur ledit axe (R) d'un angle $\alpha_n$, chaque angle $\alpha_n$ étant sensiblement différent des angles $\alpha_{n-1}$ et $\alpha_{n+1}$ d'une quantité infinitésimale.

7. Dispositif de balayage selon la revendication 1, comprenant en outre un circuit électronique (7) de lecture du signal du détecteur (6), un dispositif (2) d'entraînement autorisant une rotation des moyens réfléchissants (1) et des moyens (8, 9) de codage de cette rotation et de lecture fournissant une information audit circuit électronique de lecture (7).

**Patentansprüche**

1. Lichtstrahl-Abtasteinrichtung mit

Reflektionsmitteln (M, 1), die um eine Rotationsachse (R) drehbar sind und gegenüber dieser Achse um einen vorgegebenen ersten Winkel $1/2$ $B_1$ + i geneigt sind, wobei die Rotationsachse und der Winkel i eine ideale Ebene zur Lichtstrahlabtastung definieren, die gegenüber der Rotationsachse (R) um einen vorgegebenen zweiten Winkel i + 90° geneigt ist;
einem auf einer gegenüber der idealen Ebene um einen Winkel $B_1$ geneigten Achse angeordneten Detektor, wobei die Elemente der Vorrichtung derart ausgebildet sind, daß sie einen rotierenden Strahl ($R_T$), der von einem Gesichtsfeld eines vorgegebenen dritten Winkels $A_1$ ausgeht, in einen stationären Strahl ($R_F$) in Richtung auf den Detektor (6) reflektieren,

wobei die alle drei Winkel A1, i, B1 derart gewählt sind, daß die Winkelabweichung zwischen dem rotierenden Strahl ($R_T$) und der idealen Abtastebene minimiert ist.

2. Abtastvorrichtung nach Anspruch 1, wobei für den Winkel i gilt:

$$i = \frac{\pi}{2} - B_3 - \frac{1}{2} B_1$$

wobei $B_1$ der Winkel zwischen $R_T$ und $R_F$ ist und $R_T$ der Schnittlinie der beiden Ebenen $P_T$ und $P_F$ entspricht und wobei $B_3$ die Lösung des folgenden Systems von 6 Gleichungen mit 6 Unbekannten ist:

$$\cos C_1 = \cos A_1 \cdot \cos B_1$$

$$\tan \alpha_1 = \frac{\tan A_1}{\sin B_1}$$

$$\cos A_2 = \left[ \cos \frac{B_1}{2} \cdot \cos \frac{C_1}{2} \right] + \left[ \sin \frac{B_1}{2} \cdot \sin \frac{C_1}{2} \cdot \cos \alpha_1 \right]$$

$$\cos \gamma_2 = \frac{\cos \frac{C_1}{2} - \cos A_2 \cos \frac{B_1}{2}}{\sin A_2 \sin \frac{B_1}{2}}$$

$$\cos \alpha_3 = \left[ - \cos^2 \gamma_2 \right] + \left[ \sin^2 \gamma_2 \cdot \cos A_2 \right]$$

$$\cos B_3 = \frac{\cos \gamma_2 + \cos \gamma_2 \cos \alpha_3}{\sin \gamma_2 \cdot \sin \alpha_3}$$

3. Abtastvorrichtung nach Anspruch 1 oder 2, wobei die Reflektionsmittel als Spiegel ausgebildet sind.

4. Abtastvorrichtung nach Anspruch 1 oder 2, wobei die Reflektionsmittel als N-seitiges Prisma ausgebildet sind, wobei jede Seite reflektierend ist.

5. Abtastvorrichtung nach Anspruch 1 oder 2, wobei die Reflektionsmittel als Stumpf einer regelmäßigen Pyramide ausgebildet sind, deren Seitenflächen reflektierend sind und den gleichen Winkel mit der Rotationsachse (R) einschließen, wobei die beiden Endflächen als regelmäßige Polygone ausgebildet sind.

6. Abtastvorrichtung nach Anspruch 1 oder 2, wobei die Reflektionsmittel als Polyeder ausgebildet sind, das durch zwei ebene Polygone begrenzt ist, wobei die ebenen Polygone orthogonal zur Achse (R) verlaufen, wobei die N Seitenflächen des Polyeders Trapeze sind, die gegenüber der Achse (R) um einen Winkel $\alpha_n$ geneigt sind, wobei sich jeder Winkel $\alpha_n$ von den Winkeln $\alpha_{n-1}$ und $\alpha_{n+1}$ im wesentlichen um einen infinitesimalen Betrag unterscheidet.

7. Abtastvorrichtung nach Anspruch 1, ferner mit einer elektronischen Schaltung (7) zum Lesen des Signals des Detektors (6), einer eine Rotation der Reflektionsmittel (1) ermöglichenden Antriebsvorrichtung (2) und Mitteln (8, 9) zum Kodieren dieser Rotation und zum Lesen, um der elektronischen Leseschaltung (7) eine Information zur Verfügung zu stellen.

## Claims

1. Device for scanning a light beam, comprising reflecting means (M, 1) able to move about an axis of rotation (R) and inclined with respect to this axis by a first given angle $\frac{1}{2}B_1 + i$ the said axis of rotation and the said angle $i$ defining an ideal plane for scanning the light beam inclined with respect to the axis of rotation (R) by a second given angle $i+90°$;

   a detector disposed on an axis inclined with respect to the ideal plane by an angle $B_1$, the elements of the said device being adapted so as to reflect a rotating beam ($R_T$) coming from a field of view of a third given angle $A_1$ into a fixed beam ($R_F$) towards the detector (6), all of the three angles $A_1$, $i$, $B_1$ being selected so as to minimise the angular spacing between the rotating beam ($R_T$) and the said ideal scanning plane.

2. Scanning device according to claim 1, wherein the angle $i$ is written:

$$i = \frac{\pi}{2} - B_3 - \frac{1}{2} B_1$$

   wherein $B_1$ is the angle between $R_T$ and $R_F$, $R_T$ corresponding to the intersection of the two planes $P_T$ and $P_F$ and wherein $B_3$ is the solution of the following system of 6 equations with 6 unknowns:

$$\cos C_1 = \cos A_1 \cos B_1$$

$$\tan \alpha_1 = \frac{\tan A_1}{\tan B_1}$$

$$\cos A_2 = [\cos \frac{B_1}{2} \cos \frac{C_1}{2}] + [\sin \frac{B_1}{2} \sin \frac{C_1}{2} \cos \alpha_1]$$

$$\cos \gamma_2 = [\cos \frac{C_1}{2} - \cos A_2 \cos \frac{B_1}{2}] / \sin A_2 \sin \frac{1}{2} B_1$$

$$\cos B_3 = \frac{\cos \gamma_2 + \cos \gamma_2 \cdot \cos \alpha_3}{\sin \alpha_3 \sin \gamma_2}$$

$$\cos \alpha_3 = (-\cos^2 \gamma_2) + \sin^2 \gamma_2 \cdot \cos A_2$$

3. Scanning device according to one of claims 1 and 2, wherein the said reflecting means are a mirror.

4. Scanning device according to one of claims 1 and 2, wherein the said reflecting means are a prism with N sides, each side being reflective.

5. Scanning device according to one of claims 1 and 2, wherein the said reflecting means are a frustum of a regular pyramid of which the lateral faces are reflective and form the same angle to the axis of rotation (R), the two bases being formed from regular polygons.

6. Scanning device according to one of claims 1 and 2, wherein the said reflecting means are a polyhedron defined by two planar polygons, the said planar polygons being orthogonal to the axis (R), the N lateral faces of the said polyhedron being trapezia inclined with respect to the said axis (R) by an angle $\alpha_n$, each angle $\alpha_n$ substantially differing from the angles $\alpha_{n-1}$ and $\alpha_{n+1}$ by an infinitesimal amount.

7. Scanning device according to claim 1. also comprising an electronic circuit (7) for reading the signal of the detector (6), a driving device (2) permitting a rotation of the reflecting means (1) and means (8, 9) for encoding this rotation and for reading, providing an information to the said electronic reading circuit (7).

M

A

Rf

Rt

**Figure 1**

M

Axe A perpendiculaire à la feuille

Rf

Rt

**Figure 2**

**Figure 3**

$A_1 = -\diamond- 45$    $A_1 = -\square- 50$    $A_1 = -\times- 55$    $A_1 = -+- 60$

$A_1 =$ Demi angle de champ en degrés

**Figure 4**

i

$$A_1 = \frac{1}{2} \text{ angle incidence}$$

$A_1 = \Diamond\!-45$     $A_1 = \text{—}\square\text{—} 50$     $A_1 = \text{—}\!*\!\text{—} 55$     $A_1 = \text{—}\!+\!\text{—} 60$

**Figure 5**

**Figure 6**